# EUROPEAN PATENT APPLICATION

(11) **EP 4 679 837 A1**
(43) Date of publication of application: **14.01.2026**
(21) Application number: 24769879.8
(22) Date of filing: 08.03.2024
(51) Int. Cl.: H04N 21/431

(54) **INTERACTION METHOD, AND DEVICE AND STORAGE MEDIUM**

(30) Priority: 10.03.2023 CN 202310237525
(71) Applicant: Chengdu Guanghexinhao Technology Co., Ltd., Chengdu, Sichuan 610095 (CN)
(72) Inventor: CAI, Yangming, Beijing 100028 (CN); YANG, Ting, Beijing 100028 (CN); SU, Min, Beijing 100028 (CN); LIU, Changxin, Beijing 100028 (CN)
(74) Representative: Isarpatent
(86) International application number: PCT/CN2024/080809
(87) International publication number: WO 2024/188186

(57) **Abstract**

Embodiments of the present disclosure provide an interaction method and device, and a storage medium. The method includes: displaying a video playback interface of a current video; displaying, within a first window in the video playback interface, a first resource identifier corresponding to at least one recommended resource; and displaying a second window in the video playback interface and displaying, within the second window, a second resource identifier corresponding to the at least one recommended resource, in response to a trigger operation instruction for the first window. A user is prompted of the presence of the recommended resource through the first window during playback of the current video, and the user is directed to trigger the first window to view details of the recommended resource. Then, the second resource identifier corresponding to the recommended resource is displayed within the second window in the video playback interface after the user triggers the first window.

## Description

### CROSS-REFERENCE TO RELATED APPLICATIONS

The present application is based on and claims priority to Chinese Application No. 202310237525.6, filed on March 10, 2023, the disclosure of which is incorporated herein by reference in its entirety.

### TECHNICAL FIELD

Embodiments of the present disclosure relate to the field of computer and network communication technologies, and in particular, to an interaction method and device, and a storage medium.

### BACKGROUND

In the related art, a functional area, also referred to as a quick access area, is usually configured in a video playback interface. As such, a specific additional function can be provided to implement information recommendation while a video is being played, and the functional area and recommended information may be hidden during watching of the video to ensure viewing experience of the video.

However, the presence of the hidden functional area and recommended information is easily ignored during watching of the video, and consequently the recommended information cannot be effectively provided.

### SUMMARY

Embodiments of the present disclosure provide an interaction method and device, and a storage medium to resolve the above technical problems.

According to a first aspect, an embodiment of the present disclosure provides an interaction method. The method includes:
displaying a video playback interface of a current video;
displaying, within a first window in the video playback interface, a first resource identifier corresponding to at least one recommended resource; and
displaying a second window in the video playback interface and displaying, within the second window, a second resource identifier corresponding to the at least one recommended resource, in response to a trigger operation instruction for the first window.

According to a second aspect, an embodiment of the present disclosure provides an interaction device. The device includes:
a display unit configured to display a video playback interface of a current video; and display, within a first window in the video playback interface, a first resource identifier corresponding to at least one recommended resource; and
a processing unit configured to control the display unit to display a second window in the video playback interface and display, within the second window, a second resource identifier corresponding to the at least one recommended resource, in response to a trigger operation instruction for the first window.

According to a third aspect, an embodiment of the present disclosure provides an electronic device. The electronic device includes: at least one processor and a memory, where
the memory stores computer-executable instructions; and
the at least one processor executes the computer-executable instructions stored in the memory, to cause the at least one processor to perform the interaction method according to the first aspect and various possible designs of the first aspect.

According to a fourth aspect, an embodiment of the present disclosure provides a computer-readable storage medium storing computer-executable instructions that, when executed by a processor, cause the interaction method according to the first aspect and various possible designs of the first aspect to be implemented.

According to a fifth aspect, an embodiment of the present disclosure provides a computer program product, including computer-executable instructions that, when executed by a processor, cause the interaction method according to the first aspect and various possible designs of the first aspect to be implemented.

According to a sixth aspect, an embodiment of the present disclosure provides a computer program, including computer-executable instructions that, when executed by a processor, cause the interaction method according to the first aspect and various possible designs of the first aspect to be implemented.

### BRIEF DESCRIPTION OF THE DRAWINGS

In order to more clearly describe the technical solutions in the embodiments of the present disclosure or in the related art, the accompanying drawings for describing the embodiments or the related art will be briefly described below. Apparently, the accompanying drawings in the description below show the embodiments of the present disclosure, and those of ordinary skill in the art may still derive other accompanying drawings from these accompanying drawings without creative efforts.
FIG. 1 is a diagram of an example of a hidden functional area in a video playback interface in the related art;
FIG. 2 is a schematic flowchart of an interaction method according to an embodiment of the present disclosure;
FIG. 3 is a schematic diagram of an interface variation for displaying a recommended resource according to an embodiment of the present disclosure;
FIG. 4 is a schematic flowchart of an interaction method according to another embodiment of the present disclosure;
FIG. 5 is a schematic flowchart of an interaction method according to another embodiment of the present disclosure;
FIG. 6 is a schematic diagram of an interface variation of an interaction method according to an embodiment of the present disclosure;
FIG. 7 is a schematic flowchart of an interaction method according to another embodiment of the present disclosure;
FIG. 8 is a schematic diagram of an interface variation for displaying a functional area or switching a video according to an embodiment of the present disclosure;
FIG. 9a is a schematic diagram of an interface variation when a channel is entered according to an embodiment of the present disclosure;
FIG. 9b is a schematic diagram of an interface variation when a channel is entered according to another embodiment of the present disclosure;
FIG. 10 is a block diagram of a structure of an interaction device according to an embodiment of the present disclosure; and
FIG. 11 is a schematic diagram of a hardware structure of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure will be described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

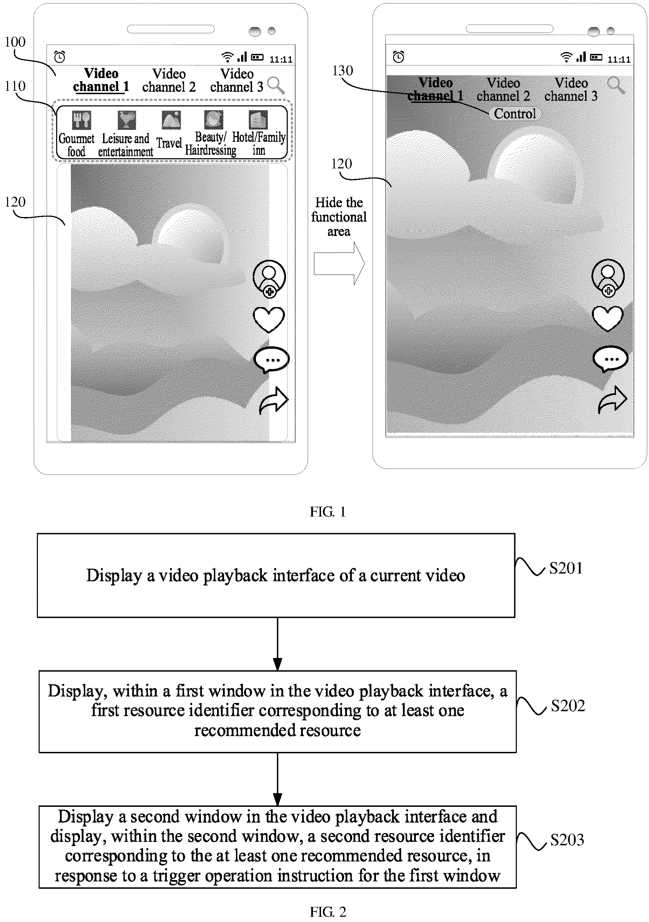

In the related art, a functional area, also referred to as a quick access area (a function entry navigation area, usually in the form of "icon + text" grid navigation), is usually configured in a video playback interface. As such, a specific additional function can be provided while a video is being played. For example, in a video playback interface 100 of a video channel 1 shown on the left side of FIG. 1, a functional area 110 configured to search for resources associated with a first channel is displayed below a channel tab bar, the functional area includes a plurality of recommended channel identifiers, a playback window 120 of a video is below the functional area 110, and recommended information associated with a recommended channel may be displayed by tapping any one of the recommended channel identifiers.

To increase a size of the playback window of the video, and ensure viewing experience of the video, the functional area may be hidden during watching of the video. However, a user ignores the presence of the hidden functional area and the recommended information when watching the video, and consequently the recommended information cannot be effectively provided to the user.

To resolve the above technical problems, a control configured to unfold the functional area, such as a control 130 shown on the right side of FIG. 1, may be provided in the video playback interface. However, to ensure viewing experience of the video and to avoid excessive occlusion on video content being played, the control is usually small in size and may not have a text identifier, is generally disposed at an edge position of the interface, and is not easy to draw attention of a user, and consequently the user does not easily know how to view the recommended information again, and will forget the presence of the hidden functional area and the recommended information. As a result, the recommended information cannot serve its recommendation purpose.

Therefore, the present disclosure provides an interaction method, in which a first resource identifier corresponding to at least one recommended resource is displayed within a first window in a video playback interface of a current video, so that a user can intuitively know, through the first window, that there is currently a recommended resource, and the user is directed to trigger the first window to view details of the recommended resource. Then, a second resource identifier corresponding to the at least one recommended resource is displayed within a second window in the video playback interface after the user triggers the first window, thereby effectively recommending related resources to the user during playback of the video.

It should be noted that user information and data involved in the present disclosure are information and data for which an authorization is obtained from the user or a full authorization is obtained from each party, and the collection, use, and processing of relevant data need to comply with relevant laws, regulations, and standards of relevant countries and regions, for which corresponding operation entries are provided for the user to choose to authorize or deny.

The interaction method in the present disclosure is described in detail below with reference to specific embodiments.

FIG. 2 is a schematic flowchart of an interaction method according to an embodiment of the present disclosure. The method in this embodiment may be applied to a terminal device or a server. The interaction method includes the following steps.

S201: Display a video playback interface of a current video.

In this embodiment, a function of recommending a resource to a user based on video content is provided in a specific video channel (e.g., a shopping channel), where the resource may be commodities, services, and the like, such as recommendations on gourmet catering, leisure and entertainment. When the user enters the video channel to play a video, a video playback interface of the current video may be displayed, and the current video is played within a playback window of the video in the video playback interface.

S202: Display, within a first window in the video playback interface, a first resource identifier corresponding to at least one recommended resource.

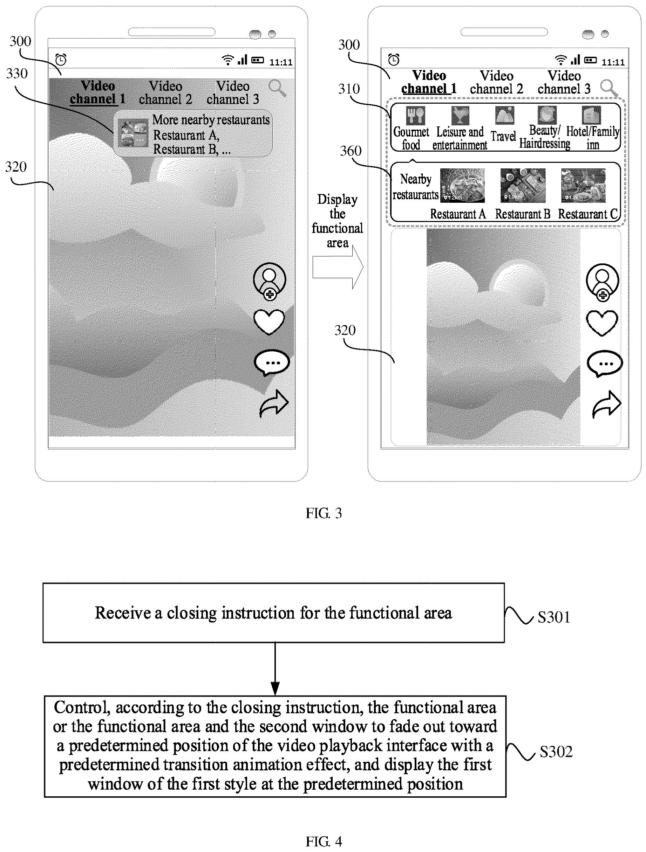

In this embodiment, when a resource is recommended to the user based on the current video, a first resource identifier corresponding to at least one recommended resource may be displayed within the first window in the video and interface. For example, a first resource identifier corresponding to at least one recommended resource (restaurant resource information) is displayed within a first window 330 in a video playback interface 300 on the left side of FIG. 3. Optionally, the first window 330 floats in a playback window 320 of the video. Optionally, the first window may be a popover control or another control.

Optionally, the first resource identifier includes one or a combination of: an image of the at least one recommended resource, a name of the at least one recommended resource, an image of a resource provider corresponding to the at least one recommended resource, and a name of the resource provider corresponding to the at least one recommended resource.

A picture of a predetermined resource is displayed in the video playback interface, a resource of the same type as the predetermined resource is obtained as the at least one recommended resource, the first window is displayed on the picture of the predetermined resource, and the first resource identifier corresponding to the at least one recommended resource is displayed within the first window.

S203: Display a second window in the video playback interface and display, within the second window, a second resource identifier corresponding to the at least one recommended resource, in response to a trigger operation instruction for the first window.

In this embodiment, the user may perform the trigger operation on the first window after observing that the first resource identifier corresponding to the at least one recommended resource is displayed within the first window. In this case, the first window may be hidden, the second window is displayed in the video playback interface, and the second resource identifier corresponding to the at least one recommended resource is displayed within the second window. As shown on the right side of FIG. 3, a second resource identifier corresponding to at least one recommended resource is displayed within a second window 360 in the video playback interface 300.

Optionally, the second resource identifier includes one or a combination of: the image of the at least one recommended resource, the name of the at least one recommended resource, a value attribute of the at least one recommended resource, the image of a resource provider (e.g., a merchant or a store offering commodities or services) corresponding to the at least one recommended resource, the name of the resource provider corresponding to the at least one recommended resource, and an area of the resource provider corresponding to the at least one recommended resource. Compared with the first resource identifier corresponding to the at least one recommended resource displayed in the first window, the second resource identifier corresponding to the at least one recommended resource displayed in the second window is more comprehensive and richer, that is, more information about the at least one recommended resource can be displayed through the second window, so that the user can have a more comprehensive understanding of the at least one recommended resource, thereby providing convenience for the user to learn more information about the recommended resource, and improving a recommendation effect.

According to the interaction method provided in this embodiment, the video playback interface of the current video is displayed; the first resource identifier corresponding to the at least one recommended resource is displayed within the first window in the video playback interface; and the second window is displayed in the video playback interface and the second resource identifier corresponding to the at least one recommended resource is displayed within the second window, in response to the trigger operation instruction for the first window. A user is prompted the presence of the recommended resource through the first window during playback of the current video, and the user is directed to trigger the first window to view details of the recommended resource. Then, the second resource identifier corresponding to the recommended resource is displayed within the second window in the video playback interface after the user triggers the first window, thereby effectively recommending related resources to the user during playback of the video, diversifying interaction manners during playback of the video, and helping the user to efficiently obtain information.

On the basis of the above embodiments, a video channel (e.g., a shopping channel) to which the current video belongs further provides a functional area, the functional area may include a plurality of recommended channel identifiers, and different recommended channels correspond to different resource types. For example, the functional area may be a functional area configured to search for different types of resources, and may include a gourmet catering recommended channel identifier, a leisure and entertainment recommended channel identifier, and the like. In order to better display video content, the functional area may be closed, thereby hiding the functional area to increase the size of the playback window of the video and improve viewing experience of the video.

Further, in the video playback interface of the current video, the functional area may be in a hidden state during playback of the video, and the functional area is displayed in the video playback interface in response to the trigger operation instruction for the first window, where the functional area includes a plurality of recommended channel identifiers that include the first recommended channel identifier corresponding to the at least one recommended resource. For example, as shown on the right side of FIG. 3, a second resource identifier corresponding to at least one recommended resource displayed within the second window 360 is a second resource identifier corresponding to a restaurant resource, and the restaurant resource belongs to gourmet catering and corresponds to the gourmet catering recommended channel identifier in the functional area, so that the second window and the first recommended channel identifier corresponding to the at least one recommended resource are associatively displayed. An association relationship (for example, a restaurant resource belongs to gourmet catering) between the second window and the first recommended channel identifier of the functional area may be presented by using an associative display method.

On the basis of the above embodiments, the functional area may include a plurality of recommended channel identifiers, including but not limited to a first recommended channel identifier, a second recommended channel identifier, a third recommended channel identifier, and the like, any one of the recommended channel identifiers may serve as an entry to a recommended resource aggregation page of a corresponding recommended channel, and the recommended resource aggregation page may be a display page used to display a plurality of recommended resources belonging to the recommended channel (for example, a plurality of recommended resources are displayed as a list). A process of displaying the recommended resource aggregation page is as follows. A recommended resource aggregation page corresponding to the first recommended channel identifier and/or the second recommended channel identifier is displayed in response to a trigger operation for the first recommended channel identifier and/or the second recommended channel identifier, so that the user can view, through the recommended resource aggregation page, more recommended resources belonging to the recommended channel, thereby providing the user with more choices.

On the basis of the above embodiments, considering that a display area of the functional area is limited, only some recommended channel identifiers may be able to be displayed in the display area of the functional area, while some other recommended channel identifiers are hidden. Therefore, a third recommended channel identifier may be displayed in the functional area in response to a swipe trigger operation for the functional area, where the third recommended channel identifier is a hidden recommended channel identifier. Through the swipe trigger operation, the user can view recommended channel identifiers that are hidden in the functional area, which provides the basis for expanding more recommended channel identifiers in the functional area.

On the basis of any one of the above embodiments, the first window may have different styles. The first window may be of a first style when the first resource identifier corresponding to the at least one recommended resource is not displayed or does not exist. In this case, only the functional area may be displayed in the video playback interface in response to a trigger operation instruction for the first window of the first style. Because the first resource identifier corresponding to the at least one recommended resource does not need to be displayed within the first window of the first style, the first window of the first style is small, occlusion on the video may be reduced, and optionally, prompt information such as "resource discovery" may be displayed in the first window of the first style. When the first resource identifier corresponding to the at least one recommended resources is displayed, the first window may be of a second style, which is larger than that of the first style.

Further, the first window of the first style is usually displayed in the video playback interface during playback of the video, and if the first resource identifier corresponding to the at least one recommended resource needs to be displayed, the first window may be controlled to switch from the first style to the second style to display, within the first window of the second style, the first resource identifier corresponding to the at least one recommended resource.

In this embodiment, when the user performs some specific operations, such as replaying, viewing comments, and viewing associated information of the current video, on the current video, related recommended information may be obtained based on content of the current video, that is, a first resource identifier corresponding to at least one recommended resource associated with the current video is obtained in response to a predetermined instruction such as a replaying instruction, a comment viewing instruction, and an associated information viewing instruction for the current video. For example, when the current video browsed is a store exploring video, a store resource of the same type may be obtained, and another store resource near a store in the store exploring video may also be obtained, so that the first window is linked to video content, the user can easily learn about related recommended resources through the first window while watching the video content, and a need to further view the recommended resources is generated.

On the basis of any one of the above embodiments, as shown in FIG. 4, the method may further include the following steps.

S301: Receive a closing instruction for the functional area.

In this embodiment, in order to better display video content, the functional area may be closed, thereby hiding the functional area to increase the size of the playback window of the video and improve viewing experience of the video.

The closing of the functional area may be implemented through a tap operation at any position in the playback window of the video, through a swipe operation, such as an upward swipe operation, at any position in the video playback interface, or through another feasible operation, which is not limited in this embodiment. When the functional area is displayed in the video playback interface, a closing instruction for the functional area may be sent when the user needs to close the functional area, where the closing instruction may be any one of the above operation instructions.

S302: Control, according to the closing instruction, the functional area or the functional area and the second window to fade out toward a predetermined position of the video playback interface with a predetermined transition animation effect, and display the first window of the first style at the predetermined position.

In this embodiment, when the functional area is displayed in the video playback interface, the functional area may be controlled to be closed, and the first window of the first style is displayed at the predetermined position of the video playback interface in response to the closing instruction for the functional area. When the functional area and the second window are displayed in the video playback interface, the functional area and the second window may be controlled to be closed, and the first window of the first style is displayed at the predetermined position of the video playback interface in response to the closing instruction for the functional area.

The functional area and the second window are hidden to increase the size of the playback window for the video, that is, the playback window of the video is expanded to an area where the functional area is originally located, the predetermined position where the first window of the first style is located may be at an edge position in the playback window of the video, and the size needs to be as small as possible to avoid excessive occlusion on video content being played. In this case, the user may not be aware that the first window of the first style may be used to reunfold the hidden functional area, and as a result, the user ignores the presence of the hidden functional area while watching the video in the channel, and consequently the functional area cannot serve its purpose, or the user does not know how to reunfold the hidden functional area when the functional area needs to be used. Therefore, in this embodiment, when the functional area is controlled to be closed, the functional area may be controlled to fade out toward a predetermined position of the video playback interface with a predetermined transition animation effect, and the predetermined position of the video playback interface is an area displaying the first window of the first style, the functional area fades out toward the predetermined position, and the first window of the first style is displayed at the predetermined position, thereby forming a transition from fading out of the functional area to display of the first window of the first style to obtain a visual effect that the first window of the first style is formed by changing the functional area, so that the association between the first window of the first style and the functional area is increased, and the cognition of the user that the hidden functional area can be reunfolded through the first window of the first style is enhanced, which in turn can effectively make the functional area serve its purpose, and increase the frequency of use of the functional area by the user.

Optionally, the playback window of the video may be expanded during or after the fading out of the functional area toward the predetermined position with the predetermined transition animation effect.

According to the interaction method provided in this embodiment, the transition from the functional area to the first window of the first style is implemented with the predetermined transition animation effect when the functional area is closed, so that the association between the first window of the first style and the functional area is increased, and the cognition of the user that the hidden functional area can be reunfolded through the first window is enhanced, which in turn can effectively make the functional area serve its purpose, and increase the frequency of use of the functional area by the user.

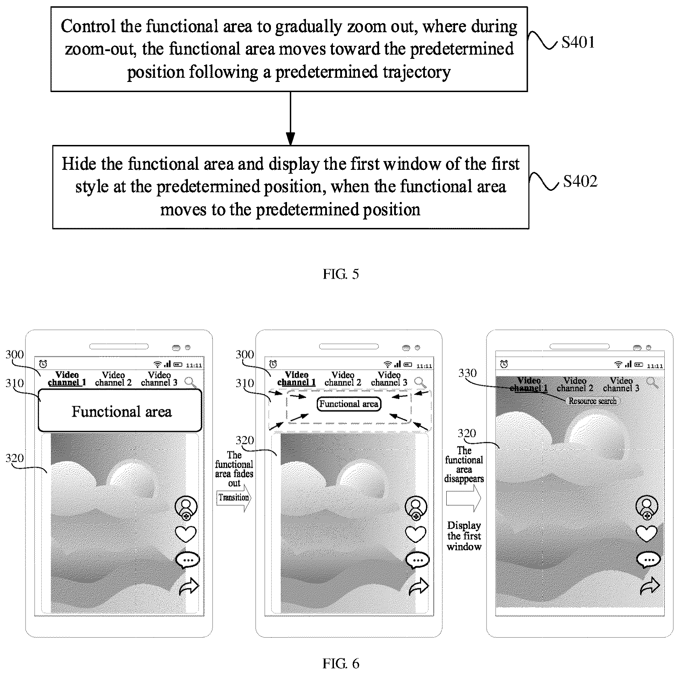

On the basis of any one of the above embodiments, as shown in FIG. 5, the controlling the functional area to fade out toward the predetermined position of the video playback interface with the predetermined transition animation effect, and displaying the first window of the first style at the predetermined position described in S302 may specifically include:

S401: Control the functional area to gradually zoom out, where during zoom-out, the functional area moves toward the predetermined position following a predetermined trajectory.

S402: Hide the functional area and display the first window of the first style at the predetermined position when the functional area moves to the predetermined position.

In this embodiment, as shown in FIG. 6, the predetermined transition animation effect may be that a functional area 310 in the video playback interface 300 gradually zooms out, and moves toward a predetermined position following a predetermined trajectory during zoom-out, that is, a presented effect is that the functional area gradually zooms out toward the predetermined position following the predetermined trajectory, where the predetermined trajectory may be a straight trajectory or a curved trajectory, which is not limited herein. Optionally, content in the functional area may zoom out synchronously during zoom-out of the functional area 310, or the content in the functional area is simply not displayed (a zoom-out speed and a moving speed are so high that the presented effect is not affected whether the content in the functional area is displayed). When the functional area 310 moves to the predetermined position, the functional area 310 is controlled to be hidden, and the first window 330 of the first style is controlled to be displayed at the predetermined position, thereby presenting an effect that the functional area 310 changes to the first window 330 of the first style. Optionally, the playback window 320 of the video may be expanded during or after the fading out of the functional area 310.

To better present the effect that the functional area changes to the first window of the first style, a zoom-out speed and a moving speed of the functional area, or the functional area and the second window, may be controlled, so that when the functional area, or the functional area and the second window move to the predetermined position, the size of the functional area just zooms out to the size of the first window, or a size smaller than that of the first window. As such, the effect that the functional area changes to the first window of the first style is more consistent.

On the basis of the above embodiments, when the first window of the first style is displayed at the predetermined position, the first window of the first style may be controlled to be displayed at the predetermined position in a color of the functional area, and then changed from the color of the functional area to a default color. For example, a background color of the functional area is dark gray, the functional area fades out toward the predetermined position with a predetermined transition animation effect, and the first window of the first style is displayed at the predetermined position with a dark gray background first. As such, the effect that the functional area changes to the first window of the first style can be enhanced, then the color changes from dark gray to the default color, such as light gray, and transparency can be further increased to avoid occlusion on video content.

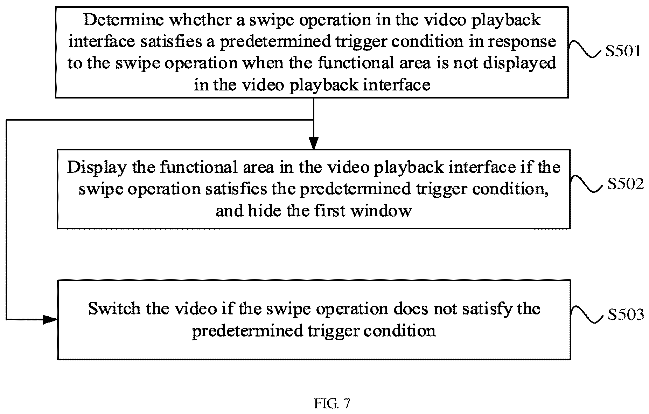

On the basis of any one of the above embodiments, as shown in FIG. 7, the method further includes:
S501: determine whether a swipe operation in the video playback interface satisfies a predetermined trigger condition in response to the swipe operation when the functional area is not displayed in the video playback interface;
S502: display the functional area in the video playback interface if the swipe operation satisfies the predetermined trigger condition, and hide the first window; or
S503: switch the video if the swipe operation does not satisfy the predetermined trigger condition.

In this embodiment, when the functional area is not displayed in the video playback interface, that is, the functional area is hidden, in addition to triggering the first window (not limited to the first style or the second style) to display the functional area, the user can also perform a swipe operation (such as a downward swipe operation) in the video playback interface for the same purpose. The swipe operation is a type of operation that is easily implemented when a terminal device is held in one hand, which makes it easier to control display of the functional area. However, considering that a swipe operation (for example, swipe down to switch a previous video) is usually used when switching a video in a playback window of the video, the swipe operation in the video playback interface may be identified. A condition to be satisfied by a swipe operation for displaying the functional area may be configured in advance, i.e., a predetermined trigger condition. As long as the swipe operation satisfies the predetermined trigger condition, the functional area is displayed in the video playback interface, and if the swipe operation does not satisfy the predetermined trigger condition, the video in the playback window of the video is switched. The first window may be hidden when the functional area is displayed in the video playback interface.

Optionally, in the above embodiments, the determining whether the swipe operation satisfies the predetermined trigger condition, and displaying the functional area in the video playback interface if the swipe operation satisfies the predetermined trigger condition may specifically include the following manners.

Manner 1: Determine a swipe start position of the swipe operation, and display the functional area in the video playback interface if the swipe start position is located in a first predetermined area in the video playback interface.

In this manner, only the start position of the swipe operation is taken into consideration, and the functional area is displayed in the video playback interface only if the start position is located in the first predetermined area in the video playback interface. Otherwise, the video is switched if the start position is located outside the first predetermined area in the video playback interface. The first predetermined area may be an area that is located in an upper part of the video playback interface, and certainly may alternatively be another area, which is not limited herein.

Manner 2: Determine a swipe distance and a swipe speed of the swipe operation, and display the functional area in the video playback interface if the swipe distance and the swipe speed respectively satisfy a predetermined swipe distance condition and a predetermined swipe speed condition.

In this manner, both the swipe distance and the swipe speed of the swipe operation may be taken into consideration, a predetermined swipe distance condition and a predetermined swipe speed condition may be configured, and the functional area is displayed in the video playback interface only if the swipe distance and the swipe speed of the swipe operation respectively satisfy the predetermined swipe distance condition and the predetermined swipe speed condition. For example, the functional area is displayed in the video playback interface if a swipe distance of a swipe operation is long (greater than a distance threshold), and a swipe speed is low (less than a speed threshold). Otherwise, the video is switched if at least one of the swipe distance and the swipe speed of the swipe operation does not satisfy the corresponding predetermined swipe distance condition and predetermined swipe speed condition.

Manner 3: Control a playback window of the current video in the video playback interface to move with the swipe operation, and display the functional area in the video playback interface if a boundary of the playback window moves into a second predetermined area in the video playback interface and the swipe operation ends when the boundary of the playback window is within the second predetermined area.

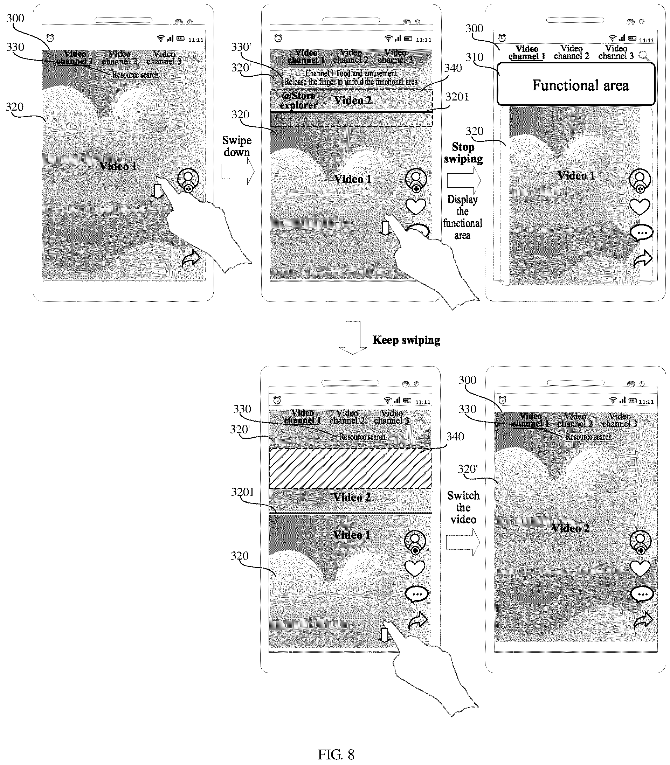

In this manner, the playback window of the current video may move with the swipe operation. For example, as shown in FIG. 8, the swipe operation is a downward swipe operation, a playback window 320 of a current video (video 1) moves downward with the downward swipe operation, while a playback window 320' of a previous video (video 2) is gradually displayed, and a boundary 3201 of the playback window of the current video, namely, a boundary between the playback window of the current video and the playback window of the previous video, also moves accordingly. It is possible to monitor whether the boundary 3201 of the playback window of the current video moves into a second predetermined area 340 in the video playback interface, and in this case, the swipe operation is released, that is, the swipe operation ends when the boundary 3201 of the playback window of the current video is within the second predetermined area 340, and the functional area 310 may be displayed in the video playback interface 300. Otherwise, the video may be switched if the swipe operation ends when the boundary 3201 of the playback window of the current video is not within the second predetermined area 340, including the situation that the swipe operation ends when the boundary 3201 of the playback window of the current video does not enter the second predetermined area 340, or that the boundary 3201 of the playback window of the current video enters the second predetermined area 340, then continues to move and leaves the second predetermined area 340, and after leaving the second predetermined area 340, the swipe operation ends. The second predetermined area 340 may be an area that is located in an upper part of the video playback interface, and certainly may alternatively be another area, which is not limited herein.

Optionally, in manner 3, if the boundary of the playback window moves into the second predetermined area, the first window may be controlled to transform and switch from the first style to a third style, and some or all of the plurality of recommended channel identifiers are displayed within the first window of the third style. For example, as shown in FIG. 8, the first window is controlled to change to be enlarged from a first style 330 to a third style 330', and more content such as prompt text "Release the hand to unfold the functional area" is displayed within the first window 330' of the third style, and an identifier (such as an icon and/or a function name) of one or more functions included in the functional area may also be displayed. If the boundary 3201 of the playback window leaves the second predetermined area 340, the first window 330' of the third style is controlled to revert to the first window 330 of the first style. Through the transformation of the first window, the user can be prompted that the functional area is in an unfolded (or about to be unfolded) state, that is, the user can be prompted that the boundary of the playback window of the current video has moved into the second predetermined area, and the functional area can be displayed in the video playback interface if the swipe operation ends.

On the basis of any one of the above embodiments, in order to enable the user to be aware of the presence of the functional area when entering the channel over which the video playback interface is located, and to learn about the purpose of the functional area, the following manners may be used.

Manner 1: Display the video playback interface and display the functional area in the video playback interface with a predetermined animation effect, in response to a trigger instruction for a channel over which the video playback interface is located.

In this manner, the channel over which the video playback interface is located is a specific channel, and the trigger instruction for the channel over which the video playback interface is located may be an operation instruction for triggering the channel in a channel tab bar, such as a tap operation or a swipe operation in the channel tab bar, to enter the channel and display the video playback interface. The video playback interface may include a playback window of a video and a functional area, and the functional area may be displayed with a predetermined animation effect to highlight the presence of the functional area.

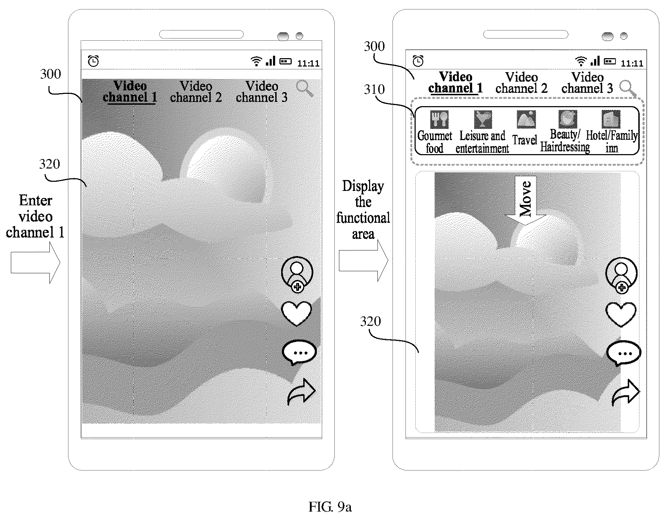

Optionally, as shown in FIG. 9a, the predetermined animation effect may be as follows: A playback window 320 of a current video is first displayed in a video playback interface 300. Then, the playback window 320 is controlled to move downward, and a functional area 310 is displayed above the playback window 320, thereby emphasizing the appearance of the functional area, and a positional relationship with the playback window is also emphasized.

Manner 2: Display a predetermined opening animation associated with the functional area, display the video playback interface after display of the predetermined opening animation ends, and display the functional area in the video playback interface, in response to a trigger instruction for a channel over which the video playback interface is located.

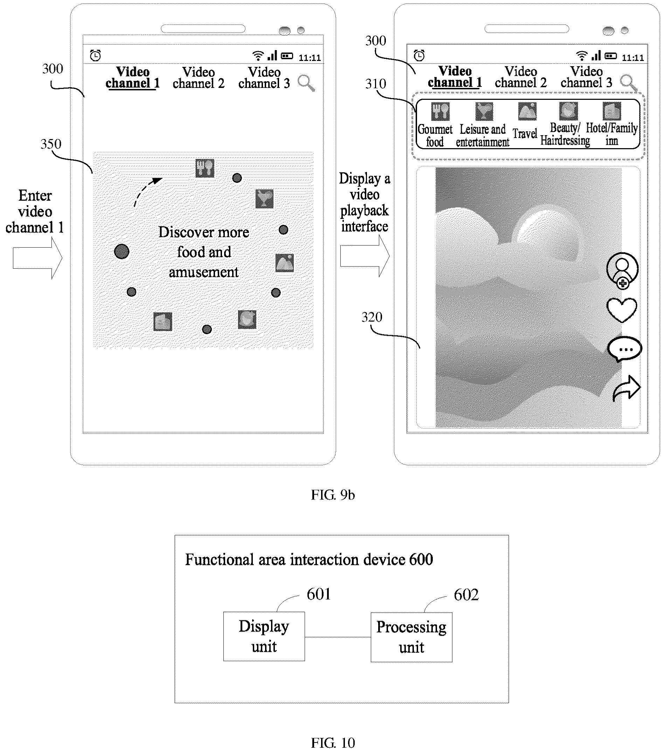

In this manner, the predetermined opening animation associated with the functional area may be first displayed after entering the channel over which the video playback interface is located in response to the trigger instruction for the channel. For example, as shown in FIG. 9b, various recommended channel identifiers of the functional area are displayed with a specific animation effect (e.g., rotation about a designated center) in a predetermined opening animation 350, which emphasizes a function of the functional area. A duration of the predetermined opening animation may be controlled within a relatively short duration range, for example, 2 seconds. After display of the predetermined opening animation 350 ends, a video playback interface 300 is displayed, and a functional area 310 is displayed in the video playback interface 300, so that the user can learn about the purpose of the functional area, thereby preventing the user from swiping a video directly after entering the channel and ignoring the presence of the functional area.

In addition, when the functional area is displayed in the video playback interface, the functional area is displayed at the same level of the playback window, and the presence of the functional area is highlighted by strengthening an information level of the functional area, so as to avoid the video playback interface focusing excessively on video content and weakening the functional area (a display level of the functional area is lower than that of the playback window).

Corresponding to the interaction method in the above embodiment, FIG. 10 is a block diagram of a structure of an interaction device according to an embodiment of the present disclosure. For ease of illustration, only parts related to this embodiment of the present disclosure are shown. Referring to FIG. 10, the interaction device 600 includes: a display unit 601 and a processing unit 602.

The display unit 601 is configured to display a video playback interface of a current video; and display, within a first window in the video playback interface, a first resource identifier corresponding to at least one recommended resource.

The processing unit 602 is configured to control the display unit 601 to display a second window in the video playback interface and display, within the second window, a second resource identifier corresponding to the at least one recommended resource, in response to a trigger operation instruction for the first window.

In one or more embodiments of the present disclosure, a picture of a predetermined resource is displayed in the video playback interface, the first window is displayed on the picture of the predetermined resource, and the at least one recommended resource is a resource of the same type as the predetermined resource.

In one or more embodiments of the present disclosure, the first resource identifier includes one or a combination of: an image of the at least one recommended resource, a name of the at least one recommended resource, an image of a resource provider corresponding to the at least one recommended resource, and a name of the resource provider corresponding to the at least one recommended resource; and
the second resource identifier includes one or a combination of: the image of the at least one recommended resource, the name of the at least one recommended resource, a value attribute of the at least one recommended resource, the image of the resource provider corresponding to the at least one recommended resource, the name of the resource provider corresponding to the at least one recommended resource, and an area of the resource provider corresponding to the at least one recommended resource.

In one or more embodiments of the present disclosure, the processing unit 602 is further configured to:
control the display unit 601 to display a functional area in the video playback interface in response to the trigger operation instruction for the first window, where the functional area includes a plurality of recommended channel identifiers that include a first recommended channel identifier corresponding to the at least one recommended resource; and
associatively display the second window and the first recommended channel identifier corresponding to the at least one recommended resource.

In one or more embodiments of the present disclosure, the plurality of recommended channel identifiers further include a second recommended channel identifier; and the processing unit 602 is further configured to:
control the display unit 601 to display a recommended resource aggregation page corresponding to the first recommended channel identifier and/or the second recommended channel identifier in response to a trigger operation for the first recommended channel identifier and/or the second recommended channel identifier.

In one or more embodiments of the present disclosure, the processing unit 602 is further configured to:
control the display unit 601 to display a third recommended channel identifier in the functional area in response to a swipe trigger operation for the functional area.

In one or more embodiments of the present disclosure, when controlling the display unit 601 to display, within the first window in the video playback interface, the first resource identifier corresponding to the at least one recommended resource, the processing unit 602 is configured to:
control the first window to switch from a first style to a second style; and
control the display unit 601 to display, within the first window of the second style, the first resource identifier corresponding to the at least one recommended resource.

In one or more embodiments of the present disclosure, the processing unit 602 is further configured to:
control the functional area or the functional area and the second window to fade out toward a predetermined position of the video playback interface with a predetermined transition animation effect, and display the first window of the first style at the predetermined position, in response to a closing instruction for the functional area.

In one or more embodiments of the present disclosure, the processing unit 602 is further configured to:
determine whether a swipe operation in the video playback interface satisfies a predetermined trigger condition in response to the swipe operation when the functional area is not displayed in the video playback interface;
control the display unit 601 to display the functional area in the video playback interface if the swipe operation satisfies the predetermined trigger condition, and hide the first window; or
switch the video if the swipe operation does not satisfy the predetermined trigger condition.

In one or more embodiments of the present disclosure, when the functional area is displayed in the video playback interface if the swipe operation satisfies the predetermined trigger condition, the processing unit 602 is configured to:
determine a swipe start position of the swipe operation, and display the functional area in the video playback interface if the swipe start position is located in a first predetermined area in the video playback interface; or
determine a swipe distance and a swipe speed of the swipe operation, and display the functional area in the video playback interface if the swipe distance and the swipe speed respectively satisfy a predetermined swipe distance condition and a predetermined swipe speed condition; or
control a playback window of the current video in the video playback interface to move with the swipe operation, and display the functional area in the video playback interface if a boundary of the playback window moves into a second predetermined area in the video playback interface and the swipe operation ends when the boundary of the playback window is within the second predetermined area.

In one or more embodiments of the present disclosure, the processing unit 602 is further configured to:
control the first window to switch from the first style to a third style if the boundary of the playback window moves into the second predetermined area, and display, within the first window of the third style, some or all of the plurality of recommended channel identifiers; and
control the first window to revert to the first style if the boundary of the playback window leaves the second predetermined area.

In one or more embodiments of the present disclosure, the processing unit 602 is further configured to:
control the display unit 601 to display the video playback interface and display the functional area in the video playback interface with a predetermined animation effect, in response to a trigger instruction for a video channel to which the current video belongs; or
control the display unit 601 to display a predetermined opening animation associated with the functional area,
display the video playback interface after display of the predetermined opening animation ends, and display the functional area in the video playback interface, in response to a trigger instruction for a video channel to which the current video belongs.

The device provided in this embodiment may be configured to perform the technical solution of the above method embodiment. The implementation principle and technical effects thereof are similar, and are not described herein again in this embodiment.

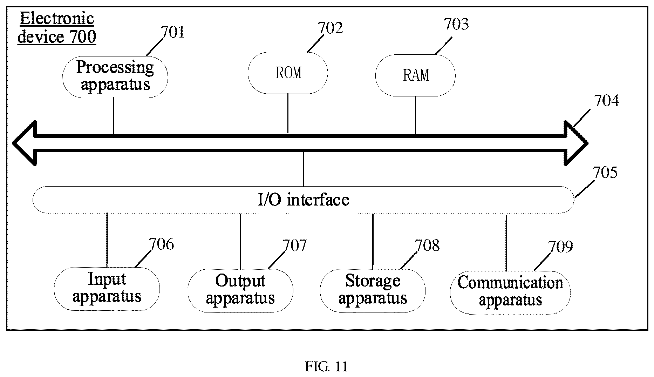

FIG. 11 is a schematic diagram of a structure of an electronic device 700 suitable for implementing the embodiments of the present disclosure. The electronic device 700 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle-mounted navigation terminal), and a fixed terminal such as a digital television (TV) and a desktop computer. The electronic device shown in FIG. 11 is merely an example, and shall not impose any limitation on the function and scope of use of the embodiments of the present disclosure.

As shown in FIG. 11, the electronic device 700 may include a processing apparatus (e.g., a central processing unit or a graphics processing unit) 701 that may perform a variety of appropriate actions and processing in accordance with a program stored in a read-only memory (ROM) 702 or a program loaded from a storage apparatus 708 into a random access memory (RAM) 703. The RAM 703 further stores various programs and data required for the operation of the electronic device 700. The processing apparatus 701, the ROM 702, and the RAM 703 are connected to one another through a bus 704. An input/output (I/O) interface 705 is also connected to the bus 704.

Generally, the following apparatuses may be connected to the I/O interface 705: an input apparatus 706 including, for example, a touchscreen, a touchpad, a keyboard, a mouse, a camera, a microphone, an accelerometer, a gyroscope, etc.; an output apparatus 707 including, for example, a liquid crystal display (LCD), a speaker, a vibrator, etc.; the storage apparatus 708 including, for example, a tape, a hard disk, etc.; and a communication apparatus 709. The communication apparatus 709 may allow the electronic device 700 to perform wireless or wired communication with other devices to exchange data. Although FIG. 11 shows the electronic device 700 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 709, installed from the storage apparatus 708, or installed from the ROM 702. When the computer program is executed by the processing apparatus 701, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to perform the method shown in the above embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, an interaction method is provided. The method includes:
displaying a video playback interface of a current video;
displaying, within a first window in the video playback interface, a first resource identifier corresponding to at least one recommended resource; and
displaying a second window in the video playback interface and displaying, within the second window, a second resource identifier corresponding to the at least one recommended resource, in response to a trigger operation instruction for the first window.

In one or more embodiments of the present disclosure, a picture of a predetermined resource is displayed in the video playback interface, the first window is displayed on the picture of the predetermined resource, and the at least one recommended resource is a resource of the same type as the predetermined resource.

In one or more embodiments of the present disclosure, the first resource identifier includes one or a combination of: an image of the at least one recommended resource, a name of the at least one recommended resource, an image of a resource provider corresponding to the at least one recommended resource, and a name of the resource provider corresponding to the at least one recommended resource; and
the second resource identifier includes one or a combination of: the image of the at least one recommended resource, the name of the at least one recommended resource, a value attribute of the at least one recommended resource, the image of the resource provider corresponding to the at least one recommended resource, the name of the resource provider corresponding to the at least one recommended resource, and an area of the resource provider corresponding to the at least one recommended resource.

In one or more embodiments of the present disclosure, the method further includes:
displaying a functional area in the video playback interface in response to the trigger operation instruction for the first window, where the functional area includes a plurality of recommended channel identifiers that include a first recommended channel identifier corresponding to the at least one recommended resource; and
associatively displaying the second window and the first recommended channel identifier corresponding to the at least one recommended resource.

In one or more embodiments of the present disclosure, the plurality of recommended channel identifiers further include a second recommended channel identifier; and
a recommended resource aggregation page corresponding to the first recommended channel identifier and/or the second recommended channel identifier is displayed in response to a trigger operation for the first recommended channel identifier and/or the second recommended channel identifier.

In one or more embodiments of the present disclosure, the method further includes:
displaying a third recommended channel identifier in the functional area in response to a swipe trigger operation for the functional area.

In one or more embodiments of the present disclosure, the displaying, within the first window in the video playback interface, the first resource identifier corresponding to the at least one recommended resource includes:
controlling the first window to switch from a first style to a second style; and
displaying, within the first window of the second style, the first resource identifier corresponding to the at least one recommended resource.

In one or more embodiments of the present disclosure, the method further includes:
receiving a closing instruction for the functional area; and
controlling, according to the closing instruction, the functional area or the functional area and the second window to fade out toward a predetermined position of the video playback interface with a predetermined transition animation effect, and displaying the first window of the first style at the predetermined position.

In one or more embodiments of the present disclosure, the method further includes:
determining whether a swipe operation in the video playback interface satisfies a predetermined trigger condition in response to the swipe operation when the functional area is not displayed in the video playback interface;
displaying the functional area in the video playback interface if the swipe operation satisfies the predetermined trigger condition, and hiding the first window; or
switching the video if the swipe operation does not satisfy the predetermined trigger condition.

In one or more embodiments of the present disclosure, the displaying the functional area in the video playback interface if the swipe operation satisfies the predetermined trigger condition includes:
determining a swipe start position of the swipe operation, and displaying the functional area in the video playback interface if the swipe start position is located in a first predetermined area in the video playback interface; or determining a swipe distance and a swipe speed of the swipe operation, and displaying the functional area in the video playback interface if the swipe distance and the swipe speed respectively satisfy a predetermined swipe distance condition and a predetermined swipe speed condition; or
controlling a playback window of the current video in the video playback interface to move with the swipe operation, and displaying the functional area in the video playback interface if a boundary of the playback window moves into a second predetermined area in the video playback interface and the swipe operation ends when the boundary of the playback window is within the second predetermined area.

In one or more embodiments of the present disclosure, the method further includes:
controlling the first window to switch from the first style to a third style if the boundary of the playback window moves into the second predetermined area, and displaying, within the first window of the third style,
some or all of the plurality of recommended channel identifiers; and
controlling the first window to revert to the first style if the boundary of the playback window leaves the second predetermined area.

In one or more embodiments of the present disclosure, the method further includes:
displaying the video playback interface and displaying the functional area in the video playback interface with a predetermined animation effect, in response to a trigger instruction for a video channel to which the current video belongs; or
displaying a predetermined opening animation associated with the functional area, displaying the video playback interface after display of the predetermined opening animation ends, and displaying the functional area in the video playback interface, in response to a trigger instruction for a video channel to which the current video belongs.

In a second aspect, according to one or more embodiments of the present disclosure, an interaction device is provided. The interaction device includes:
a display unit configured to display a video playback interface of a current video; and display, within a first window in the video playback interface, a first resource identifier corresponding to at least one recommended resource; and
a processing unit configured to control the display unit to display a second window in the video playback interface and display, within the second window, a second resource identifier corresponding to the at least one recommended resource, in response to a trigger operation instruction for the first window.

According to one or more embodiments of the present disclosure, a picture of a predetermined resource is displayed in the video playback interface, the first window is displayed on the picture of the predetermined resource, and the at least one recommended resource is a resource of the same type as the predetermined resource.

According to one or more embodiments of the present disclosure, the first resource identifier includes one or a combination of: an image of the at least one recommended resource, a name of the at least one recommended resource, an image of a resource provider corresponding to the at least one recommended resource, and a name of the resource provider corresponding to the at least one recommended resource; and
the second resource identifier includes one or a combination of: the image of the at least one recommended resource, the name of the at least one recommended resource, a value attribute of the at least one recommended
resource, the image of the resource provider corresponding to the at least one recommended resource, the name of the resource provider corresponding to the at least one recommended resource, and an area of the resource provider corresponding to the at least one recommended resource.

According to one or more embodiments of the present disclosure, the processing unit is further configured to:
control the display unit to display a functional area in the video playback interface in response to the trigger operation instruction for the first window, where the functional area includes a plurality of recommended channel identifiers that include a first recommended channel identifier corresponding to the at least one recommended resource; and
associatively display the second window and the first recommended channel identifier corresponding to the at least one recommended resource.

According to one or more embodiments of the present disclosure, the plurality of recommended channel identifiers further include a second recommended channel identifier; and the processing unit is further configured to:
control the display unit to display a recommended resource aggregation page corresponding to the first recommended channel identifier and/or the second recommended channel identifier in response to a trigger operation for the first recommended channel identifier and/or the second recommended channel identifier.

According to one or more embodiments of the present disclosure, the processing unit is further configured to:
control the display unit to display a third recommended channel identifier in the functional area in response to a swipe trigger operation for the functional area.

According to one or more embodiments of the present disclosure, when controlling the display unit to display, within the first window in the video playback interface, the first resource identifier corresponding to the at least one recommended resource, the processing unit is configured to:
control the first window to switch from a first style to a second style; and
control the display unit to display, within the first window of the second style, the first resource identifier corresponding to the at least one recommended resource.

According to one or more embodiments of the present disclosure, the processing unit is further configured to:
control the functional area or the functional area and the second window to fade out toward a predetermined position of the video playback interface with a predetermined transition animation effect, and display the first window of the first style at the predetermined position, in response to a closing instruction for the functional area.

According to one or more embodiments of the present disclosure, the processing unit is further configured to:
determine whether a swipe operation in the video playback interface satisfies a predetermined trigger condition in response to the swipe operation when the functional area is not displayed in the video playback interface;
control the display unit to display the functional area in the video playback interface if the swipe operation satisfies the predetermined trigger condition, and hide the first window; or
switch the video if the swipe operation does not satisfy the predetermined trigger condition.

According to one or more embodiments of the present disclosure, when the functional area is displayed in the video playback interface if the swipe operation satisfies the predetermined trigger condition, the processing unit is configured to:
determine a swipe start position of the swipe operation, and display the functional area in the video playback interface if the swipe start position is located in a first predetermined area in the video playback interface; or
determine a swipe distance and a swipe speed of the swipe operation, and display the functional area in the video playback interface if the swipe distance and the swipe speed respectively satisfy a predetermined swipe distance condition and a predetermined swipe speed condition; or
control a playback window of the current video in the video playback interface to move with the swipe operation, and display the functional area in the video playback interface if a boundary of the playback window moves into a second predetermined area in the video playback interface and the swipe operation ends when the boundary of the playback window is within the second predetermined area.

According to one or more embodiments of the present disclosure, the processing unit is further configured to:
control the first window to switch from the first style to a third style if the boundary of the playback window moves into the second predetermined area, and display, within the first window of the third style, some or all of the plurality of recommended channel identifiers; and
control the first window to revert to the first style if the boundary of the playback window leaves the second predetermined area.

According to one or more embodiments of the present disclosure, the processing unit is further configured to:
control the display unit to display the video playback interface and display the functional area in the video playback interface with a predetermined animation effect, in response to a trigger instruction for a video channel to which the current video belongs; or
control the display unit to display a predetermined opening animation associated with the functional area,
display the video playback interface after display of the predetermined opening animation ends, and display the functional area in the video playback interface, in response to a trigger instruction for a video channel to which the current video belongs.

In a third aspect, according to one or more embodiments of the present disclosure, an electronic device is provided. The electronic device includes: at least one processor and a memory, where the memory stores computer-executable instructions; and
the at least one processor executes the computer-executable instructions stored in the memory, to cause the at least one processor to perform the interaction method according to the first aspect and various possible designs of the first aspect.

In a fourth aspect, according to one or more embodiments of the present disclosure, a computer-readable storage medium is provided. The computer-readable storage medium stores computer-executable instructions that, when executed by a processor, cause the interaction method according to the first aspect and various possible designs of the first aspect to be implemented.

In a fifth aspect, according to one or more embodiments of the present disclosure, a computer program product is provided. The computer program product includes computer-executable instructions that, when executed by a processor, cause the interaction method according to the first aspect and various possible designs of the first aspect to be implemented.

The foregoing descriptions are merely explanations of preferred embodiments of the present disclosure and the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An interaction method, comprising:
displaying a video playback interface of a current video;
displaying, within a first window in the video playback interface, a first resource identifier corresponding to at least one recommended resource; and
displaying a second window in the video playback interface and displaying, within the second window, a second resource identifier corresponding to the at least one recommended resource, in response to a trigger operation instruction for the first window.

2. The method according to claim 1, wherein
a picture of a predetermined resource is displayed in the video playback interface, the first window is displayed on the picture of the predetermined resource, and the at least one recommended resource is a resource of the same type as the predetermined resource.

3. The method according to either of claims 1 and 2, wherein
the first resource identifier comprises one or a combination of: an image of the at least one recommended resource, a name of the at least one recommended resource, an image of a resource provider corresponding to the at least one recommended resource, and a name of the resource provider corresponding to the at least one recommended resource; and
the second resource identifier comprises one or a combination of: the image of the at least one recommended resource, the name of the at least one recommended resource, a value attribute of the at least one recommended resource, the image of the resource provider corresponding to the at least one recommended resource, the name of the resource provider corresponding to the at least one recommended resource, and an area of the resource provider corresponding to the at least one recommended resource.

4. The method according to any one of claims 1 to 3, further comprising:
displaying a functional area in the video playback interface in response to the trigger operation instruction for the first window, wherein the functional area comprises a plurality of recommended channel identifiers that comprise a first recommended channel identifier corresponding to the at least one recommended resource; and
associatively displaying the second window and the first recommended channel identifier corresponding to the at least one recommended resource.

5. The method according to claim 4, wherein the plurality of recommended channel identifiers further comprise a second recommended channel identifier; and the method further comprises:
displaying a recommended resource aggregation page corresponding to the first recommended channel identifier and/or the second recommended channel identifier in response to a trigger operation for the first recommended channel identifier and/or the second recommended channel identifier.

6. The method according to claim 4 or 5, wherein the method further comprises:
displaying a third recommended channel identifier in the functional area in response to a swipe trigger operation for the functional area.

7. The method according to any one of claims 4 to 6, wherein the displaying, within the first window in the video playback interface, the first resource identifier corresponding to the at least one recommended resource comprises:
controlling the first window to switch from a first style to a second style; and
displaying, within the first window of the second style, the first resource identifier corresponding to the at least one recommended resource.

8. The method according to claim 7, wherein the method further comprises:
receiving a closing instruction for the functional area; and
controlling, according to the closing instruction, the functional area or the functional area and the second window to fade out toward a predetermined position of the video playback interface with a predetermined transition animation effect, and displaying the first window of the first style at the predetermined position.

9. The method according to claim 8, wherein the method further comprises:
determining whether a swipe operation in the video playback interface satisfies a predetermined trigger condition in response to the swipe operation when the functional area is not displayed in the video playback interface;
displaying the functional area in the video playback interface if the swipe operation satisfies the predetermined trigger condition, and hiding the first window; or
switching the video if the swipe operation does not satisfy the predetermined trigger condition.

10. The method according to claim 9, wherein the displaying the functional area in the video playback interface if the swipe operation satisfies the predetermined trigger condition comprises:
determining a swipe start position of the swipe operation, and displaying the functional area in the video playback interface if the swipe start position is located in a first predetermined area in the video playback interface; or
determining a swipe distance and a swipe speed of the swipe operation, and displaying the functional area in the video playback interface if the swipe distance and the swipe speed respectively satisfy a predetermined swipe distance condition and a predetermined swipe speed condition; or
controlling a playback window of the current video in the video playback interface to move with the swipe operation, and displaying the functional area in the video playback interface if a boundary of the playback window moves into a second predetermined area in the video playback interface and the swipe operation ends when the boundary of the playback window is within the second predetermined area.

11. The method according to claim 10, wherein the method further comprises:
controlling the first window to switch from the first style to a third style if the boundary of the playback window moves into the second predetermined area, and displaying, within the first window of the third style, some or all of the plurality of recommended channel identifiers; and
controlling the first window to revert to the first style if the boundary of the playback window leaves the second predetermined area.

12. The method according to any one of claims 4 to 11, wherein the method further comprises:
displaying the video playback interface and displaying the functional area in the video playback interface with a predetermined animation effect, in response to a trigger instruction for a video channel to which the current video belongs; or
displaying a predetermined opening animation associated with the functional area, displaying the video playback interface after display of the predetermined opening animation ends, and displaying the functional area in the video playback interface, in response to a trigger instruction for a video channel to which the current video belongs.

13. An interaction device, comprising:
a display unit configured to display a video playback interface of a current video; and display, within a first window in the video playback interface, a first resource identifier corresponding to at least one recommended resource; and
a processing unit configured to control the display unit to display a second window in the video playback interface and display, within the second window, a second resource identifier corresponding to the at least one recommended resource, in response to a trigger operation instruction for the first window.

14. An electronic device, comprising: at least one processor and a memory, wherein
the memory stores computer-executable instructions; and
the at least one processor executes the computer-executable instructions stored in the memory, to cause the at least one processor to perform the method according to any one of claims 1 to 12.

15. A computer-readable storage medium storing computer-executable instructions that, when executed by a processor, cause the method according to any one of claims 1 to 12 to be implemented.

16. A computer program product, comprising computer-executable instructions that, when executed by a processor, cause the method according to any one of claims 1 to 12 to be implemented.

17. A computer program, comprising computer-executable instructions that, when executed by a processor, cause the method according to any one of claims 1 to 12 to be implemented.
